# EUROPEAN PATENT SPECIFICATION

(11) **EP 3 819 315 B1**
(45) Date of publication and mention of the grant of the patent: **18.01.2023**
(21) Application number: 20000406.7
(22) Date of filing: 06.11.2020
(51) Int. Cl.: C08F 8/04, C08F 297/04, C08L 53/02, C09J 153/02

(54) **POLYMER COMPOSITION AND PRESSURE SENSITIVE ADHESIVES OR FILMS MADE THEREFROM**
POLYMERZUSAMMENSETZUNG UND DARAUS HERGESTELLTE HAFTKLEBSTOFFE ODER FOLIEN
COMPOSITION POLYMÈRE ET ADHÉSIFS SENSIBLES À LA PRESSION OU FILMS FABRIQUÉS À PARTIR DE CELLE-CI

(30) Priority: 08.11.2019 US 201962932731 P
(43) Date of publication of application: 12.05.2021
(73) Proprietor: TSRC Corporation, Kaohsiung City 815 (TW)
(72) Inventor: Shih, Hsi-Hsin, 815 Kaohsiung City (TW); Tsai, Wen-Pin, 815 Kaohsiung City (TW); Yang, Feng-Yu, 815 Kaohsiung City (TW); Shiu, Tai-Yi, 815 Kaohsiung City (TW); Ting, Ching, 815 Kaohsiung City (TW)
(74) Representative: Flaccus, Rolf-Dieter

(56) References cited:
- EP-A1- 3 406 643
- US-A1- 2019 023 949

## Description

### FIELD OF THE INVENTION

The present invention relates to a polymer composition, in particular to a polymer composition comprising a vinyl aromatic based copolymer and the application to pressure sensitive adhesives and films thereof.

### DESCRIPTION OF THE PRIOR ART

The film, particularly the protective film, is composed of a layer of substrate layer and a layer of adhesive layer. Most of the current protective films are made by melt co-extrusion (or hot melt co-extrusion) or solution coating method. The composition for the solution coating method is mostly rubber-based, and the use of a large amount of solvents in the solution coating process has been gradually banned by governments. Therefore, looking for a protective film that has rubber properties and has a medium to high initial tack and can be formed by a melt co-extrusion method has become the goal of joint research and development in the industry. US Patent No. 6,465,557 discloses a hot-melt pressure-sensitive positioning adhesive for an article. The adhesive is composed of a hydrogenated thermoplastic elastomer, a tackifier and a processing oil, in which the processing oil may be distorted during application, resulting in indirect pollution of the finished product or thereby decreasing the bonding strength. US patent No. 7,645,507 proposes a protective film and a pressure sensitive adhesive, in which the pressure sensitive adhesive composition comprises a hydrogenated thermoplastic elastomer. TW Patent No. 1641636 discloses a composition and processing method, in which films can be formed by the extrusion process after the hydrogenated thermoplastic elastomer is added into the polyolefin elastomer. US Patent publication No. 20200216726 proposes a polymer composition containing a hydrogenated thermoplastic elastomer and a tackifier for forming protective films by hot melt co-extrusion. However, these materials still have various disadvantages.

EP 3 406 643 A1 relates to a hydrogenated copolymer comprising a copolymer block A comprising a vinyl aromatic compound monomer unit and a conjugated diene monomer unit, and further relates to a composition containing the hydrogenated copolymer. The composition may comprise a tackifier resin, and can be used for films, for example, surface protection films. In the copolymers disclosed in Examples 10, 19 and 24 of EP 3 406 643 A1, the amount of vinyl bonds of the butadiene block portion before hydrogenation is 75.0%, and the melt flow rate (MFR) of these copolymers is 25.0 g/10 min, 50.0 g/10 min or 55.0 g/10 min, respectively (at a temperature of 230°C, under a load of 2.16 kg).

### SUMMARY OF THE INVENTION

In one aspect, the present invention provides a vinyl aromatic based copolymer having good flow property.

In another aspect, the present invention provides a polymer composition comprising at least a first vinyl aromatic based copolymer and a tackifier, which has good flow property, particularly both good loop tack and good flow property.

In another aspect, the present invention provides a polymer composition comprising at least a first vinyl aromatic based copolymer, a second vinyl aromatic based copolymer and a tackifier, which has good flow property, particularly both good loop tack and good flow property.

In another aspect, the present invention provides the polymer composition as described above, which further comprises an olefin-based polymer of less than 10wt% of a total weight of the polymer composition.

In another aspect, the present invention provides the polymer composition as described above, wherein the polymer composition does not contain an olefin-based polymer.

In another aspect, the present invention provides the polymer composition as described above, wherein the polymer composition does not contain a processing oil.

In another aspect, the present invention provides the polymer composition as described above, wherein using the tackifier that has a different softening point can still maintain good loop tack and, more particularly, maintain good loop tack and good flow property.

The present invention provides a pressure sensitive adhesive, film or protective film made from the polymer composition described above, which is suitably made from methods of co-extrusion, blow molding or film casting, etc.

The present invention also includes other aspects for solving other problems, which will be combined with the above aspects and disclosed in detail in the following embodiments.

### DETAILED DESCRIPTION OF THE EMBODIMENTS

The preferred embodiments of the present invention will be demonstrated below to further illustrate the methods, features and advantages of the present invention, but is not used to limit the scope of the present invention. The scope of the present invention should be subject to the appended claims. In order to avoid obscuring the content of the present invention, the following description also omits conventional components, related materials, and related processing techniques.

### Measurement methods of various properties in the present invention

The vinyl aromatic monomer content of the vinyl aromatic based copolymer: measured with a nuclear magnetic resonance analyzer, which is a measurement method well known to those skilled in the art.

The vinyl structure content of the conjugated diene monomer content in the vinyl aromatic based copolymer: measured with a nuclear magnetic resonance analyzer, which is a measurement method well known to those skilled in the art.

Weight average molecular weight of the vinyl aromatic based copolymers: measured by gel permeation chromatography, which is a measurement method well known to those skilled in the art.

Weight average molecular weight of the vinyl aromatic block of the vinyl aromatic based copolymers: measured by gel permeation chromatography, which is a measurement method well known to those skilled in the art.

Hydrogenation rate of the conjugated diene block of the vinyl aromatic based copolymer: measured with a nuclear magnetic resonance analyzer, which is a measurement method well known to those skilled in the art.

Melt Flow Index (MFI): measured according to ASTM D1238 standard.

Order-disorder transition temperature (ODT): measured with dynamic mechanical analysis (DMA) using TA Instruments ARES-II, which is a measurement method well known to those skilled in the art.

Loop tack: measured according to ASTM 6195-03 standard.

### Vinyl aromatic based copolymer

The present invention provides a vinyl aromatic based copolymer with good flow property. The vinyl aromatic based copolymer is represented by a formula of A1-B-A2, wherein block A1 and block A2 each represents a vinyl aromatic block, block B represents a hydrogenated conjugated diene block having a hydrogenation rate of at least 90%, and block A1 and block A2 are identical or different. A vinyl aromatic monomer content of the vinyl aromatic based copolymer is 16wt%~28wt%, preferably 18wt%~26wt%, and more preferably 20wt%~24wt%. A vinyl structure content of a conjugated diene monomer content in the vinyl aromatic based copolymer is 32wt%~50wt%, preferably less than or equal to 45 wt%, more preferably 32 wt%~45 wt%, particularly preferably 32 wt%~42 wt%, and more particularly preferably 36wt%~40wt%. A melt flow index (MFI) of the vinyl aromatic based copolymer is 20 g/10min~60 g/lOmin (230°C, 2.16 kg), preferably 30 g/10min~50 g/lOmin (230°C, 2.16 kg), more preferably 35 g/10min~45 g/lOmin (230°C, 2.16 kg). According to a preferred embodiment, an order-disorder transition temperature (ODT) of the vinyl aromatic based copolymer is 200°C~220°C. According to a preferred embodiment, a weight average molecular weight of the vinyl aromatic based copolymer is 62,000~74,000, more preferably 64,000~72,000. According to a preferred embodiment, a weight average molecular weight of the vinyl aromatic block A1 and the block A2 each is 3,800~4,800, preferably 4,400~4,700.

Block A1 and block A2 are individually a vinyl aromatic block, which can be derived from a vinyl aromatic monomer. For example, such monomer can be selected from the following: styrene, methyl styrene, ethyl styrene, tert-butyl styrene, dimethyl styrene, methoxystyrene, cyclohexyl styrene, vinyl biphenyl, 1-vinyl-5-hexylnaphthalene, vinyl naphthalene, vinyl anthracene, 2,4-diisopropylstyrene, 5-tert-butyl-2-methylstyrene, divinylbenzene, trivinylbenzene, divinylnaphthalene, tert-butoxystyrene, 4-propylstyrene, 4-dodecylstyrene, 2-ethyl-4-benzylstyrene, 4-(phenylbutyl)styrene, N-4-vinylphenyl-N,N-dimethylamine, (4-vinyl phenyl) dimethylaminoethyl ether, N,N-dimethylaminomethylstyrene, N,N-dimethylaminoethylstyrene, N,N-diethylaminomethylstyrene, N,N-diethylaminoethylstyrene, vinyl xylene, vinyl pyridine, diphenyl ethylene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, indene, diphenylethylene containing a tertiary amino group and any combinations thereof. Block B is a hydrogenated conjugated diene block with a hydrogenation rate of at least 90% and can be derived from a conjugated diene monomer. Such monomer, for example, can be selected from the following: 1,3-butadiene, 1,3-pentadiene, 1,3-hexadiene, 1,3-heptadiene, 2-methyl-1,3-butadiene (isoprene), 2-methyl-1,3-pentadiene, 2-hexyl-1,3-butadiene, 2-phenyl-1,3-butadiene, 2-phenyl-1,3-pentadiene, 2-p-tolyl-1,3-butadiene, 2-benzyl-1,3-butadiene, 3-methyl-1,3-pentadiene, 3-methyl-1,3-hexadiene, 3-butyl-1,3-octadiene, 3-phenyl-1,3-pentadiene, 4-methyl-1,3-pentadiene, 1,4-diphenyl-1,3-butadiene, 2,3-dimethyl-1,3-butadiene, 2,3-dimethyl-1,3-pentadiene, 2,3-dibenzyl-1,3-butadiene, 4,5-diethyl-1,3-octadiene, myrcene and any combinations thereof.

The method for producing the aforementioned vinyl aromatic based copolymer includes anionic polymerization and hydrogenation. Regarding the anionic polymerization process, the preferred option is to use the organic alkali metal compound containing organolithium as the catalyst initiator, so that the selected monomer can be added in a suitable solvent at a temperature of 0°C to 100°C to obtain an active polymer. Since the end of the molecular chain contains a carbon-lithium ion, when the monomer is added, the molecular chain will grow and the polymerization will continue. Specific examples of organolithium initiators include n-propyl lithium, isopropyl lithium, n-butyl lithium, sec-butyl lithium, tert-butyl lithium, n-pentyl lithium, phenyl lithium, tolyl lithium, etc., preferably n-butyl lithium or sec-butyl lithium. The amount of organolithium initiator used in the polymerization depends on the molecular weight of the polymer to be obtained, which usually depends on the actual consumption of the overall monomers. For the method of anionic polymerization, reference may be made to similar documents such as US Patent No. 4,039,593. Suitable solvents for the polymerization reaction include an inert organic solvent, which means a solvent that does not participate in the reaction during the polymerization reaction. Examples of such solvents include aliphatic hydrocarbons such as butane, isobutane, pentane, n-pentane, isopentane, 2,2,4-trimethylpentane, isohexane, n-hexane, isoheptane, n-heptane, isooctane and n-octane; cycloalkanes such as cyclohexane, methylcyclohexane, ethylcyclohexane, cyclopentane, cycloheptane, and methylcyclopentane; and aromatic hydrocarbon compounds such as benzene, toluene, xylene, ethylbenzene, diethylbenzene and propylbenzene, in which the preferred solvent suitable for the present invention is cyclohexane.

The hydrogenation is carried out after the polymerization reaction. The conventional method used to prepare the hydrogenated block copolymer of the present invention involves a suitable catalyst or catalytic precursor which comprises a titanium-based catalytic system, a suitable reducing agent such as aluminum alkyls, and a suitable catalyst stabilizer such as the phosphate groups etc. Hydrogenation is usually carried out at a temperature range of 0°C to 200°C and a hydrogen pressure range of 1 to 90 kg/cm². The catalyst concentration usually ranges from about 10 ppm to about 200 ppm of the titanium-based catalyst, based on the weight of the total solid content of the polymer. For the method of preparing hydrogenated block copolymers, reference may be made to similar documents such as US Patent No. 7,612,148.

### Example of vinyl aromatic based copolymer (Polymer P)

Polymer P is an exemplary example of the aforementioned vinyl aromatic based copolymer, which is prepared by the following method. A 100-liter reactor was charged with 48 kg of cyclohexane and 120 g of THF (tetrahydrofuran). 9.50 g of NBL (n-butyl lithium) and then 690 g of styrene monomers were added to initiate the reaction. After the polymerization of styrene monomers was completed, 4.89 kg of butadiene monomers were added. After the polymerization of butadiene monomers was completed, 690 g of styrene monomers were added. After the polymerization of styrene monomers was completed, the SBS triblock copolymer was formed, and the polymerization of this polymer was stopped with methanol. 1000 g of the polymer solution of the SBS triblock copolymer prepared above was taken, placed in a pressure-resistant hydrogenation reactor and maintained in nitrogen atmosphere. 0.11 mmol of the stabilizer was dissolved into 10 ml of cyclohexane at room temperature; 0.055 mmol of bis(cyclopentadienyl)titanium dichloride was dispersed in 10 ml of cyclohexane; and 0.33 mmol of triisobutylaluminum was dissolved in 10 ml of cyclohexane. The above solution was added to the SBS triblock copolymer. Hydrogen was injected at a pressure of 25 kg/cm² at 80°C for hydrogenation until more than 95% of the butadiene double bonds were saturated. The produced polymer was deposited in water to form colloidal particles and then dried.

### Other vinyl aromatic based copolymers other than Polymer P (RD-SEBS, TS-04, TS-07)

RD-SEBS is prepared by the following method. A 100-liter reactor was charged with 48 kg of cyclohexane and 40 g of ethylene glycol diethyl ether. 6.0 g of NBL (n-butyl lithium) and then 560 g of styrene monomers were added to initiate the reaction. After the polymerization of styrene monomers was completed, 5.1 kg of butadiene monomers were added. After the polymerization of butadiene monomers was completed, 560 g of styrene monomers were added. After the polymerization of styrene monomers was completed, the SBS triblock copolymer was formed, and the polymerization of this polymer was stopped with methanol. 1000 g of the polymer solution of the SBS triblock copolymer prepared above was taken, placed in a pressure-resistant hydrogenation reactor and maintained in nitrogen atmosphere. 0.11 mmol of the stabilizer was dissolved into 10 ml of cyclohexane at room temperature; 0.055 mmol of bis(cyclopentadienyl)titanium dichloride was dispersed in 10 ml of cyclohexane; and 0.33 mmol of triisobutylaluminum was dissolved in 10 ml of cyclohexane. The above solution was added to the SBS triblock copolymer. Hydrogen was injected at a pressure of 25 kg/cm² at 80°C for hydrogenation until more than 95% of the butadiene double bonds were saturated. The produced polymer was deposited in water to form colloidal particles and then dried.

TS-04 is prepared by the following method. A 100-liter reactor was charged with 48 kg of cyclohexane and 120 g of THF (tetrahydrofuran). 6.0 g of NBL (n-butyl lithium) and then 560 g of styrene monomers were added to initiate the reaction. After the polymerization of styrene monomers was completed, 5.1 kg of butadiene monomers were added. After the polymerization of butadiene monomers was completed, 560 g of styrene monomers were added. After the polymerization of styrene monomers was completed, the SBS triblock copolymer was formed, and the polymerization of this polymer was stopped with methanol. 1000 g of the polymer solution of the SBS triblock copolymer prepared above was taken, placed in a pressure-resistant hydrogenation reactor and maintained in nitrogen atmosphere. 0.11 mmol of the stabilizer was dissolved into 10 ml of cyclohexane at room temperature; 0.055 mmol of bis(cyclopentadienyl)titanium dichloride was dispersed in 10 ml of cyclohexane; and 0.33 mmol of triisobutylaluminum was dissolved in 10 ml of cyclohexane. The above solution was added to the SBS triblock copolymer. Hydrogen was injected at a pressure of 25 kg/cm² at 80°C for hydrogenation until more than 95% of the butadiene double bonds were saturated. The produced polymer was deposited in water to form colloidal particles and then dried.

TS-07 is prepared by the following method. A 100-liter reactor was charged with 48 kg of cyclohexane and 40 g of ethylene glycol diethyl ether. 4.0 g of NBL (n-butyl lithium) and then 430 g of styrene monomers were added to initiate the reaction. After the polymerization of styrene monomers was completed, 5.28 kg of butadiene monomers were added. After the polymerization of butadiene monomers was completed, 430 g of styrene monomers were added. After the polymerization of styrene monomers was completed, the SBS triblock copolymer was formed, and the polymerization of this polymer was stopped with methanol. 1000 g of the polymer solution of the SBS triblock copolymer prepared above was taken, placed in a pressure-resistant hydrogenation reactor and maintained in nitrogen atmosphere. 0.11 mmol of the stabilizer was dissolved into 10 ml of cyclohexane at room temperature; 0.055 mmol of bis(cyclopentadienyl)titanium dichloride was dispersed in 10 ml of cyclohexane; and 0.33 mmol of triisobutylaluminum was dissolved in 10 ml of cyclohexane. The above solution was added to the SBS triblock copolymer. Hydrogen was injected at a pressure of 25 kg/cm² at 80°C for hydrogenation until more than 95% of the butadiene double bonds were saturated. The produced polymer was deposited in water to form colloidal particles and then dried.

The properties of Polymer P and other vinyl aromatic based copolymers other than Polymer P (RD-SEBS, TS-04, TS-07) are shown in Table 1. Compared with RD-SEBS, TS-04 and TS-07, Polymer P obviously has better melt flow index (MFI).

**Table 1**

| Vinyl aromatic based copolymers (A1-B-A2 structure) | Polymer P | RD-SEBS | TS-04 | TS-07 |
|---|---|---|---|---|
| Styrene content (wt %) | 23.6 | 19.4 | 18.5 | 14.3 |
| Vinyl content (wt%) | 40.4 | 68.9 | 37.8 | 76.8 |
| Molecular weight (Mw) | 68,000 | 109,000 | 87,000 | 135,000 |
| Hydrogenation rate of conjugated diene block (%) | >95 | >95 | >95 | >95 |
| ODT (°C) | 200-220 | 230-240 | 230-240 | 230-250 |
| Molecular weight of vinyl aromatic block A1 (Mw) | 4,700 | 5,700 | 6,000 | 6,700 |
| MFI (g/10min, 230°C/2.16 kg) | 44.4 | 4.8 | 7.2 | 2 |

### Polymer composition

The present invention provides a polymer composition comprising at least a first vinyl aromatic based copolymer and a tackifier, which has good flow property, particularly has both good loop tack and good flow property. According to a preferred embodiment, the polymer composition of the present invention comprises 20-40 parts by weight of a tackifier; and 60-80 parts by weight of a polymer, wherein the polymer plus the tackifier equals 100 parts by weight. According to a more preferred embodiment, the polymer composition of the present invention comprises 25-38 parts by weight of the tackifier; and 62-75 parts by weight of the polymer, wherein the polymer plus the tackifier equals 100 parts by weight. According to another particularly preferred embodiment, the polymer composition of the present invention comprises 30-38 parts by weight of the tackifier; and 62-70 parts by weight of the polymer, wherein the polymer plus the tackifier equals 100 parts by weight. The polymer comprises at least a first vinyl aromatic based copolymer formed by polymerization of a vinyl aromatic monomer and a conjugated diene monomer. The first vinyl aromatic based copolymer may be hydrogenated or unhydrogenated, preferably hydrogenated. The vinyl aromatic monomer content of the first vinyl aromatic based copolymer is 16wt%~28wt%, preferably 18wt%~26wt%, and more preferably 20wt%~24wt%; the vinyl structure content of the conjugated diene monomer content in the first vinyl aromatic based copolymer is 32wt%~50wt%, preferably less than or equal to 45wt%, more preferably 32wt%~45wt%, particularly preferably 32wt%~42wt% and more particularly preferably 36wt%~40wt%; and the melt flow index (MFI) of the first vinyl aromatic based copolymer is 20 g/10min~60 g/lOmin (230°C, 2.16 kg), preferably 30 g/10min~50 g/lOmin (230°C, 2.16 kg), and more preferably 35 g/10min~45 g/lOmin (230°C, 2.16 kg). According to a preferred embodiment, an order-disorder transition temperature (ODT) of the first vinyl aromatic based copolymer is 200°C~220°C. According to a preferred embodiment, a weight average molecular weight of the first vinyl aromatic based copolymer is 62,000~74,000, preferably 64,000~72,000. According to a preferred embodiment, the first vinyl aromatic based copolymer has the vinyl aromatic block with a weight average molecular weight of 3,800~4,800,preferably 4,400~4,700. According to a preferred embodiment, the first vinyl aromatic based copolymer comprises the hydrogenated conjugated diene block, of which the hydrogenation rate is greater than or equal to 90%. According to another preferred embodiment, the first vinyl aromatic based copolymer comprises the hydrogenated conjugated diene block, of which the hydrogenation rate is greater than or equal to 95%.

For example, the first vinyl aromatic based copolymer may be styrene-ethylene-butylene-styrene block copolymer (SEBS), styrene-butadiene-styrene block copolymer (SBS), styrene-isoprene-styrene block copolymer (SIS), styrene-ethylene-propylene-styrene block copolymer (SEPS), styrene-ethylene-(ethylene-propylene)-styrene block copolymer (SEEPS), styrene-isoprene/butadiene-styrene block copolymer (SIBS), styrene-butadiene block copolymer (SB), styrene-isoprene block copolymer (SI), styrene-ethylene-butylene block copolymer (SEB), styrene-ethylene-propylene block copolymer (SEP) or a combination thereof, wherein the styrene-ethylene-butylene-styrene block copolymer (SEBS), the styrene-ethylene-propylene-styrene block copolymer (SEPS), the styrene-ethylene-(ethylene-propylene)-styrene block copolymer (SEEPS), the styrene-ethylene-butylene block copolymer (SEB) and the styrene-ethylene-propylene block copolymer (SEP) are hydrogenated copolymers, of which SEBS is a preferred example, as Polymer P described above.

For example, the tackifier may be aliphatic hydrocarbons, alicyclic hydrocarbons, aromatic hydrocarbons, modified hydrocarbons, aromatic modified aliphatic hydrocarbons, aromatic modified alicyclic hydrocarbons, hydrogenated hydrocarbons, hydrogenated aliphatic hydrocarbons, hydrogenated alicyclic hydrocarbons, hydrogenated aromatic modified aliphatic hydrocarbons, terpenes, modified terpenes, hydrogenated terpenes, colophony, rosin, hydrogenated rosin, rosin ester, hydrogenated rosin ester, coumarone resin, phenolic resin, polyterpene resin, modified alicyclic hydrocarbons, polymerized rosin, oligomer, or a combination thereof, wherein the monomer used to form the oligomer may be ethylene, butene, styrene or a combination thereof, and the weight average molecular weight of the oligomer is less than 10,000, preferably more than 400 and less than 10,000. The tackifier can be used to adjust the adhesion effect. However, when an excessive amount of tackifier is added, it will reduce the cohesive strength, resulting in decrease of the adhesive strength.

According to some examples, the vinyl aromatic based copolymer in the polymer composition of the present invention may only include the first vinyl aromatic based copolymer. According to some examples, the vinyl aromatic based copolymer in the polymer composition of the present invention may include a first vinyl aromatic based copolymer and a second vinyl aromatic based copolymer. The second vinyl aromatic based copolymer is formed by polymerization of a vinyl aromatic monomer and a conjugated diene monomer. The second vinyl aromatic based copolymer may be hydrogenated or unhydrogenated, preferably hydrogenated. The second vinyl aromatic based copolymer is different from the first vinyl aromatic based copolymer. In a preferred embodiment, the weight ratio of the first vinyl aromatic based copolymer to the second vinyl aromatic based copolymer is 1:0.01 to 1:5, wherein the melt flow index (MFI) of the second vinyl aromatic based copolymer is less than or equal to 5 g/lOmin (230°C, 2.16 kg), preferably 0.5 g/10min~5 g/lOmin (230°C, 2.16 kg), more preferably 0.5 g/10min~4 g/lOmin (230°C, 2.16 kg), and particularly preferably 0.5 g/10min~3 g/lOmin (230°C, 2.16 kg). The vinyl aromatic monomer content of the second vinyl aromatic based copolymer is 10wt %~15wt%, preferably 10wt%~14wt%, and more preferably 10wt%~13wt%. The vinyl structure content of the conjugated diene monomer content in the second vinyl aromatic based copolymer is greater than or equal to 60wt%, preferably 60wt%~80wt%, more preferably 70wt%~80wt%, and particularly preferably 75wt%~80wt%. The weight average molecular weight of the second vinyl aromatic based copolymer ranges from 80,000 to 180,000, preferably 100,000 to 150,000, and more preferably 120,000 to 150,000. The second vinyl aromatic based copolymer has a vinyl aromatic block with a weight average molecular weight of 4,000 to 8,000. In another preferred embodiment, the weight ratio of the first vinyl aromatic based copolymer to the second vinyl aromatic based copolymer is 1:0.01 to 1:2, wherein the melt flow index (MFI) of the second vinyl aromatic based copolymer is less than or equal to 10 g/lOmin (230°C, 2.16 kg), preferably 5 g/10min~10 g/lOmin (230°C, 2.16 kg), and more preferably 6 g/10min~8 g/lOmin (230°C, 2.16 kg). The vinyl aromatic monomer content of the second vinyl aromatic based copolymer is 10wt%~25wt%, preferably 15wt%~20wt%. The vinyl structure content of the conjugated diene monomer content in the second vinyl aromatic based copolymer is less than or equal to 45wt%, preferably 30wt%~45wt%, more preferably 35wt%~45wt%, particularly preferably 36wt% ~42wt%, and more particularly preferably 36wt%~40wt%. The weight average molecular weight of the second vinyl aromatic based copolymer is in the range of 50,000~150,000, preferably 50,000~120,000, more preferably 50,000~100,000, and particularly preferred 60,000 to 100,000. The second vinyl aromatic based copolymer has a vinyl aromatic block with a weight average molecular weight of 4,000 to 8,000, preferably 4,000 to 7,000. According to a preferred embodiment, the second vinyl aromatic based copolymer has a hydrogenated conjugated diene block with a hydrogenation rate of greater than or equal to 90%. According to another preferred embodiment, the second vinyl aromatic based copolymer has a hydrogenated conjugated diene block with a hydrogenation rate of greater than or equal to 95%.

For example, the second vinyl aromatic based copolymer may be styrene-ethylene-butylene-styrene block copolymer (SEBS), styrene-butadiene-styrene block copolymer (SBS), styrene-isoprene-styrene block copolymer (SIS), styrene-ethylene-propylene-styrene block copolymer (SEPS), styrene-ethylene-(ethylene-propylene)-styrene block copolymer (SEEPS), styrene-isoprene/butadiene-styrene block copolymer (SIBS), styrene-butadiene block copolymer (SB), styrene-isoprene block copolymer (SI), styrene-ethylene-butylene block copolymer (SEB), styrene-ethylene-propylene block copolymer (SEP) or a combination thereof, wherein the styrene-ethylene-butylene-styrene block copolymer (SEBS), the styrene-ethylene-propylene-styrene block copolymer (SEPS), the styrene-ethylene-(ethylene-propylene)-styrene block copolymer (SEEPS), the styrene-ethylene-butylene block copolymer (SEB) and the styrene-ethylene-propylene block copolymer (SEP) are hydrogenated copolymers, of which SEBS is a preferred example, such as TS-07 and TS-04 described above.

According to some examples, the polymer of the polymer composition of the present invention may further include an olefin-based polymer, and the content of the olefin-based polymer is less than 10wt% of the total weight of the polymer composition. The olefin-based polymer is an olefin-based homopolymer, an olefin-based copolymer or a combination thereof. The olefin-based homopolymer is an ethylene homopolymer, a propylene homopolymer, a butene homopolymer or a combination thereof. The olefin-based copolymer is ethylene/vinyl acetate copolymer (EVA), ethylene-butyl acrylate copolymer (EBA), ethylene-ethyl acrylate copolymer (EEA), ethylene-methyl acrylate copolymer (EMA), ethylene-acrylate, ethylene-acrylic acid ionic polymer, ethylene-norbornene copolymer, ethylene-alpha-olefin copolymer, propylene-alpha-olefin copolymer, ethylene/propylene/α-olefin terpolymer or a combination thereof. In some preferred embodiments, the polymer composition of the present invention does not include the olefin-based polymer.

According to some examples, the polymer composition of the present invention may include a processing oil, such as naphthenic oil, paraffin oil, aromatic oil, natural oil or a combination thereof. In a preferred embodiment, the polymer composition of the present invention does not include the processing oil.

According to some examples, in order to further increase applicability or enhance the physical or chemical properties, the polymer composition of the present invention may further comprise 0.01-30 parts by weight (for example, 0.01-25 parts by weight, 0.1-30 parts by weight, 0.1-20 parts by weight or 1-25 parts by weight) of an additive. The additive may include a crosslinking agent, a foaming agent, a plasticizer, a melt strength enhancer, an antioxidant, an anti-sticking agent, an antistatic agent or a combination thereof.

### Application of the polymer composition

The polymer composition of the present invention has high fluidity and good loop tack, and is suitable for pressure sensitive adhesives or for forming various films. The film can be a pressure sensitive adhesive. In a preferred embodiment, the film has a loop tack of more than 77 N/m (200 gf/inch). In a preferred embodiment, the polymer composition constituting the film has a melt flow index of more than 20 g/lOmin (190°C, 2.16 kg).

The polymer composition of the present invention is suitable for co-extrusion cast film or blown film processes, which can form a protective film comprising at least one substrate layer and at least one adhesive layer, wherein the adhesive layer is a pressure sensitive adhesive made from the aforementioned polymer composition, and forms a protective film with the substrate layer at the same time. The adhesive layer formed by the polymer composition of the present invention also has high peel strength and high loop tack, and can attach closely to metal or plastic substrates. According to some embodiments, the thickness of the adhesive layer is not limited, and people having ordinary skill in the art can adjust it according to actual needs. For example, the thickness of the adhesive layer may be about 1 µm to 100 µm, such as 1 µm, 10 µm, 20 µm, 50 µm or 100 µm. The material of the substrate layer can be any polymer material suitable for film formation by co-extrusion cast film or blown film process, such as olefin-based homopolymer, olefin-based copolymer, polyamide, thermoplastic polyamide elastomer, thermoplastic polyester elastomer (TPEE), thermoplastic polyurethane elastomer (TPU), polyester, polyurethane, polyethylene terephthalate (PET), polybutylene terephthalate (PBT), polycarbonate (PC), poly(methyl methacrylate) (PMMA) or a combination thereof. According to some examples, the thickness of the substrate layer is not particularly limited and, for example, may be 10 µm to 1.0 mm.

Specifically, the polymer composition of the present invention can be compounded in a single screw or double screw extruder to form a mixture. This mixture can be pelletized as needed. The following is an example in which the polymer composition of the present invention is pelletized and then made into films.

### Example 1

The polymer composition of Example 1: 80 wt% of Polymer P and 20 wt% of Tackifer R1125. This polymer composition was put into a twin-screw extruder and mixed and pelletized at 160°C~220°C. The pelletized material was hot pressed into films in a molding machine at a processing temperature of 200°C with preheating for three minutes, exhausting twice and actual hot pressing for four minutes. The films were cut to form standard test pieces using the release paper, and then subject to various property tests. The results are shown in Table 2.

The preparation method of the films of Examples 2 to 14 and Comparative Examples 1 to 11 exemplified in the present invention is the same as that of Example 1, except for the polymer composition. The polymer compositions of Examples 2 to 14 and Comparative Examples 1 to 11 and the properties of the formed films can be referred to Tables 2 to 8.

**Table 2**

| Polymer composition | Comp. Ex. 1 | Ex. 1 | Ex. 2 | Ex. 3 | Ex. 4 | Ex. 5 | Ex. 6 | Comp. Ex. 2 | Comp. Ex. 3 | Comp. Ex. 4 |
|---|---|---|---|---|---|---|---|---|---|---|
| Polymer P (parts by weight) | 90 | 80 | 75 | 70 | 65 | 62.5 | 60 | 55 | 50 | 45 |
| Tackifer R1125 (parts by weight) | 10 | 20 | 25 | 30 | 35 | 37.5 | 40 | 45 | 50 | 55 |

| Polymer composition/ Film property | | | | | | | | | | |
|---|---|---|---|---|---|---|---|---|---|---|
| Film thickness (mm) | 0.10 - 0.18 | 0.10 - 0.18 | 0.10 - 0.18 | 0.10 - 0.18 | 0.10 - 0.18 | 0.10 - 0.18 | 0.10 - 0.18 | 0.10 - 0.18 | 0.10 0.18 | 0.10 0.18 |
| Loop tack (N/m) (gf/inch) | 58 (149) | 91 (236) | 103 (266) | 118 (306) | 113 (292) | 111 (287) | 82 (212) | 55 (142) | 37 (95) | 29 (76) |
| MFI (g/10min, 190°C/2.16 kg) | 15 | 24 | 41 | 57 | 88 | 101 | 112 | 221 | 270 | 372 |

Table 2 shows the polymer compositions containing the tackifier and Polymer P. Comparing Examples 1 to 6 with Comparative Examples 1 to 4 shows that the tackifier in the polymer composition is preferably 20-40 parts by weight, more preferably 25-38 parts by weight, and particularly preferably 30-38 parts by weight. Polymer P is preferably 60-80 parts by weight, more preferably 62-75 parts by weight, and particularly preferably 62-70 parts by weight. The films made from the polymer compositions of Examples 1 to 6 have better loop tack (>77 N/m (200 gf/inch), >97 N/m (250 gf/inch) or >108 N/m (280 gf/inch) and superior processing properties (MFI greater than 20 g/lOmin (190°C/2.16 kg)).

**Table 3**

| Polymer composition | Ex. 4 | Ex. 7 | Ex. 8 | Ex. 9 | Comp. Ex. 5 | Comp. Ex. 6 |
|---|---|---|---|---|---|---|
| Polymer P (parts by weight) | 65 | 35 | 26 | 15 | 5 | 0 |
| TS-07 (parts by weight) | 0 | 30 | 39 | 50 | 60 | 65 |
| Tackifer R1125 (parts by weight) | 35 | 35 | 35 | 35 | 35 | 35 |
| Polymer P: TS-07 | | 1 : 0.86 | 1 : 1.5 | 1 : 3.33 | 1 : 12 | |

| Polymer composition/ Film property | | | | | | |
|---|---|---|---|---|---|---|
| Film thickness (mm) | 0.10~0.18 | 0.10~0.18 | 0.10~0.18 | 0.10~0.18 | 0.10~0.18 | 0.10~0.18 |
| Loop tack (N/m) (gf/inch) | 113 (292) | 151 (390) | 162 (420) | 181 (469) | 199 (516) | 219 (568) |
| MFI (g/lOmin, 190°C/2.16 kg) | 88 | 40 | 35 | 22 | 12 | 10 |

Table 3 shows the polymer compositions containing the tackifier and the polymer, wherein the tackifier content is maintained at 35 parts by weight, the polymer content is maintained at 65 parts by weight, and the polymer is selected from Polymer P, TS- 07 and a combination thereof. As shown in Table 3, Example 4 using only Polymer P (not including TS-07) can have good loop tack and processing properties. Examples 7 to 9 with appropriate addition of TS-07 obtain acceptable processing properties and good loop tack. As for Comparative Example 5, the content of TS-07 exceeds the content of Polymer P too much, resulting in films with reduced MFI property and deteriorated processability. Table 3 also shows that Comparative Example 6, which does not use Polymer P, has poor MFI property.

**Table 4**

| Polymer composition | Ex. 4 | Comp. Ex. 7 | Comp. Ex. 8 |
|---|---|---|---|
| Polymer P (parts by weight) | 65 | 55 | 45 |
| Tackifer R1125 (parts by weight) | 35 | 35 | 35 |
| LDPE-2119 (parts by weight) | 0 | 10 | 20 |

| Polymer composition/ Film property | | | |
|---|---|---|---|
| Film thickness (mm) | 0.10~0.18 | 0.10~0.18 | 0.10~0.18 |
| Loop tack (N/m) (gf/inch) | 113 (292) | 77 (199) | 43 (112) |
| MFI (g/10min, 190°C/2.16 kg) | 88 | 86 | 77 |

Table 4 shows the polymer compositions containing the tackifier, Polymer P and optionally added olefin-based polymer LDPE, wherein the tackifier content is maintained at 35 parts by weight, the content of Polymer P does not exceed 65 parts by weight, and the content of LDPE does not exceed 20 parts by weight. As shown in Table 4, when the content of LDPE is more than 10 parts by weight, the loop tack will obviously drop below 77 N/m (200 gf/inch).

**Table 5**

| Polymer composition | Ex. 4 | Comp. Ex. 9 |
|---|---|---|
| Polymer P (parts by weight) | 65 | 65 |
| Tackifer R1125 (parts by weight) | 35 | 35 |
| Paraffin oil (parts by weight) | 0 | 5 |

| Polymer composition/ Film property | | |
|---|---|---|
| Film thickness (mm) | 0.10~0.18 | 0.10~0.18 |
| Loop tack (N/m) (gf/inch) | 113 (292) | 74 (193) |
| MFI (g/lOmin, 190°C/2.16 kg) | 88 | 125 |

Table 5 shows the polymer compositions containing the tackifier, Polymer P and optionally added paraffin oil, wherein the content of the tackifier is maintained at 35 parts by weight, the content of Polymer P is maintained at 65 parts by weight, and the content of paraffin oil does not exceed 5 parts by weight. As shown in Table 5, when the content of paraffin oil is more than 5 parts by weight, the loop tack will obviously drop below 77 N/m (200 gf/inch).

**Table 6**

| Polymer composition | Ex. 4 | Ex. 10 |
|---|---|---|
| Polymer P (parts by weight) | 65 | 65 |
| Tackifer R1125 (parts by weight) | 35 | 0 |
| Tackifer R1100 (parts by weight) | 0 | 35 |

| Polymer composition/ Film property | | |
|---|---|---|
| Film thickness (mm) | 0.10∼0.18 | 0.10∼0.18 |
| Loop tack | | |
| (N/m) | 113 | 83 |
| (gf/inch) | (292) | (216) |
| MFI (g/10min, 190°C/2.16 kg) | 88 | 112 |

Table 6 shows the polymer compositions containing the tackifier and Polymer P. Examples 4 and 10 respectively use tackifiers with different softening points. As shown in Table 6, both Example 4 and Example 10 show good loop tack (>77 N/m (200 gf/inch)) and good processing properties (MFI more than 20 g/lOmin (190°C/2.16 kg)).

**Table 7**

| | Ex. 4 | Comp. Ex. 10 | Comp. Ex. 11 | Comp. Ex. 6 |
|---|---|---|---|---|
| Polymer P (parts by weight) | 65 | | | |
| RD-SEBS (parts by weight) | | 65 | | |
| TS-04 (parts by weight) | | | 65 | |
| TS-07 (parts by weight) | | | | 65 |
| Tackifer R1125 (parts by weight) | 35 | 35 | 35 | 35 |

| Polymer composition/ Film property | | | | |
|---|---|---|---|---|
| Film thickness (mm) | 0.10∼0.18 | 0.10∼0.18 | 0.10∼0.18 | 0.10∼0.18 |
| Loop tack | | | | |
| (N/m) | 113 | 181 | 83 | 219 |
| (gf/inch) | (292) | (470) | (215) | (568) |
| MFI (g/lOmin, 190°C/2.16 kg) | 88 | 15 | 19 | 10 |

Table 7 shows the polymer compositions containing the tackifier and the polymer, wherein the tackifier content is maintained at 35 parts by weight, the polymer content is maintained at 65 parts by weight, and the polymer is selected from Polymer P, RD-SEBS, TS-04 and TS-07. As shown in Table 7, compared with Comparative Example 6 and Comparative Examples 10-11, Example 4 can have both good loop tack (>77 N/m (200 gf/inch)) and good processing properties (MFI more than 20 g/lOmin (190 °C/2.16 kg)).

**Table 8**

| Polymer composition | Ex. 4 | Ex. 11 | Ex. 12 | Ex. 13 | Ex. 14 | Comp. Ex. 11 |
|---|---|---|---|---|---|---|
| Polymer P (parts by weight) | 65 | 60 | 50 | 39 | 30 | 0 |
| TS-04 (parts by weight) | 0 | 5 | 15 | 26 | 35 | 65 |
| Tackifer R1125 (parts by weight) | 35 | 35 | 35 | 35 | 35 | 35 |
| Polymer P: TS-04 | | 1 : 0.08 | 1 : 0.3 | 1 : 0.66 | 1 : 1.16 | |

| Polymer composition/ Film property | | | | | | |
|---|---|---|---|---|---|---|
| Film thickness (mm) | 0.10∼0.18 | 0.10∼0.18 | 0.10∼0.18 | 0.10∼0.18 | 0.10∼0.18 | 0.10∼0.18 |
| Loop tack | | | | | | |
| (N/m) | 113 | 118 | 147 | 166 | 145 | 83 |
| (gf/inch) | (292) | (305) | (380) | (431) | (376) | (215) |
| MFI (g/10min, 190°C/2.16 kg) | 88 | 59.6 | 26.8 | 20.2 | 21.6 | 19 |

Table 8 shows the polymer compositions containing the tackifier and the polymer, wherein the tackifier content is maintained at 35 parts by weight, the polymer content is maintained at 65 parts by weight, and the polymer is selected from Polymer P, TS- 04 and a combination thereof. As shown in Table 8, Example 4 using only Polymer P (not including TS-04) can have good loop tack and processing properties. Examples 11 to 14, which are appropriately added with TS-04, can obtain acceptable processing properties and good loop tack. Table 8 also shows that Comparative Example 11, which does not use Polymer P, has poor MFI property.

## Claims

1. A polymer composition for pressure sensitive adhesives or films, comprising:
a tackifier of 20-40 parts by weight; and
a polymer of 60-80 parts by weight, wherein the polymer plus the tackifier equals 100 parts by weight, the polymer comprises at least a first vinyl aromatic based copolymer formed by polymerization of a vinyl aromatic monomer and a conjugated diene monomer, wherein a vinyl aromatic monomer content of the first vinyl aromatic based copolymer is 16wt%~28wt%, a vinyl structure content of a conjugated diene monomer content in the first vinyl aromatic based copolymer is 32wt%~50wt%; and a melt flow index (MFI) of the first vinyl aromatic based copolymer is 20 g/10 min~60 g/10 min (230°C, 2.16 kg).

2. The polymer composition of claim 1, wherein the vinyl aromatic monomer content of the first vinyl aromatic based copolymer is 18wt%~26wt%, more preferably 20wt%~24wt%.

3. The polymer composition of claim 1, wherein the vinyl structure content of the conjugated diene monomer content in the first vinyl aromatic based copolymer is less than or equal to 45wt%, more preferably 32wt%~45wt%, particularly preferably 32wt%~42wt% and more particularly preferably 36wt%~40wt%.

4. The polymer composition of claim 1, wherein the melt flow index of the first vinyl aromatic based copolymer is 30 g/10min~50 g/10min (230°C, 2.16 kg), more preferably 35 g/10min~45 g/10min (230°C, 2.16 kg).

5. The polymer composition of claim 1, wherein an order-disorder transition temperature (ODT) of the first vinyl aromatic based copolymer is 200°C~220°C.

6. The polymer composition of claim 1, wherein a weight average molecular weight of the first vinyl aromatic based copolymer is 62,000~74,000, more preferably 64,000~72 000, measured by gel permeation chromatography.

7. The polymer composition of claim 1, wherein the first vinyl aromatic based copolymer has a vinyl aromatic block with a weight average molecular weight of 3,800~4,800,preferably 4,400~4,700, measured by gel permeation chromatography.

8. The polymer composition of claim 1, wherein the polymer further comprises a second vinyl aromatic based copolymer formed by polymerization of a vinyl aromatic monomer and a conjugated diene monomer, wherein a vinyl aromatic monomer content of the second vinyl aromatic based copolymer is 10wt%~15wt%, a vinyl structure content of a conjugated diene monomer content in the second vinyl aromatic based copolymer is greater than or equal to 60wt%; and a melt flow index (MFI) of the second vinyl aromatic based copolymer is less than or equal to 5 g/10 min (230°C, 2.16 kg).

9. The polymer composition of claim 8, wherein a weight ratio of the first vinyl aromatic based copolymer to the second vinyl aromatic based copolymer is 1:0.01 to 1:5.

10. The polymer composition of claim 1, wherein the polymer further comprises a second vinyl aromatic based copolymer formed by polymerization of a vinyl aromatic monomer and a conjugated diene monomer, wherein a vinyl aromatic monomer content of the second vinyl aromatic based copolymer is 10wt%~25wt%, a vinyl structure content of a conjugated diene monomer content in the second vinyl aromatic based copolymer is less than or equal to 45wt%; and a melt flow index (MFI) of the second vinyl aromatic based copolymer is less than or equal to 10 g/10 min (230°C, 2.16 kg).

11. The polymer composition of claim 10, wherein a weight ratio of the first vinyl aromatic based copolymer to the second vinyl aromatic based copolymer is 1:0.01 to 1:2.

12. The polymer composition of claim 1, wherein the polymer comprises an olefin-based polymer, a content of the olefin-based polymer is less than 10wt% of a total weight of the polymer composition, and the olefin-based polymer is an olefin-based homopolymer, an olefin-based copolymer or a combination thereof.

13. A pressure sensitive adhesive made from the polymer composition of any one of claims 1 to 12.

14. A film made from the polymer composition of any one of claims 1 to 12.

15. A protective film, comprising at least one substrate layer and at least one adhesive layer, wherein the adhesive layer is the pressure sensitive adhesive of claim 13.

16. A vinyl aromatic based copolymer represented by a formula of A1-B-A2, wherein block A1 and block A2 each represents a vinyl aromatic block, block B represents a hydrogenated conjugated diene block having a hydrogenation rate of at least 90%, block A1 and block A2 are identical or different, the vinyl aromatic based copolymer is formed by polymerization of a vinyl aromatic monomer and a conjugated diene monomer, a vinyl aromatic monomer content of the vinyl aromatic based copolymer is 16wt%~28wt%, a vinyl structure content of a conjugated diene monomer content in the vinyl aromatic based copolymer is 32wt%~50wt%; and a melt flow index (MFI) of the vinyl aromatic based copolymer is 20 g/10 min~60 g/10 min (230°C, 2.16 kg).

## Patentansprüche

1. Polymerzusammensetzung für Haftklebstoffe oder Haftklebefolien, umfassend:
20-40 Gewichtsteile Klebrigmacher und
60-80 Gewichtsteile Polymer, wobei das Polymer und der Klebrigmacher zusammen 100 Gewichtsteile ausmachen, das Polymer mindestens ein erstes Copolymer auf Basis von Vinylaromaten umfasst, das durch Polymerisation eines vinylaromatischen Monomers und eines konjugierten Dienmonomers gebildet wird, wobei der Gehalt an vinylaromatischem Monomer des ersten Copolymers auf Basis von Vinylaromaten 16 bis 28 Gew.-% beträgt, der Vinylstrukturanteil des Gehaltes an konjugiertem Dienmonomer in dem ersten Copolymer auf Basis von Vinylaromaten 32 bis 50 Gew.-% beträgt und ein Schmelzflussindex (MFI) des ersten Copolymers auf Basis von Vinylaromaten 20 g/10 min bis 60 g/10 min (230 °C, 2,16 kg) beträgt.

2. Polymerzusammensetzung nach Anspruch 1, wobei der Gehalt an vinylaromatischem Monomer des ersten Copolymers auf Basis von Vinylaromaten 18 bis 26 Gew.-%, vorzugsweise 20 bis 24 Gew.-%, beträgt.

3. Polymerzusammensetzung nach Anspruch 1, wobei der Vinylstrukturanteil des Gehaltes an konjugiertem Dienmonomer in dem ersten Copolymer auf Basis von Vinylaromaten kleiner oder gleich 45 Gew.-%, bevorzugter 32 Gew.-% bis 45 Gew.-%, besonders bevorzugt 32 Gew.-% bis 42 Gew.-% und ganz besonders bevorzugt 36 Gew.-% bis 40 Gew.-% ist.

4. Polymerzusammensetzung nach Anspruch 1, wobei der Schmelzflussindex des ersten Copolymers auf Basis von Vinylaromaten 30 g/10 min bis 50 g/10 min (230 °C, 2,16 kg), besonders bevorzugt 35 g/10 min bis 45 g/10 min (230 °C, 2,16 kg) beträgt.

5. Polymerzusammensetzung nach Anspruch 1, wobei die Ordnung-Unordnung-Übergangstemperatur (ODT) des ersten Copolymers auf Basis von Vinylaromaten 200 °C bis 220 °C beträgt.

6. Polymerzusammensetzung nach Anspruch 1, wobei das gewichtsmittlere Molekulargewicht des ersten Copolymers auf Basis von Vinylaromaten 62.000 bis 74.000, vorzugsweise 64.000 bis 72.000, beträgt, gemessen durch Gelpermeationschromatografie.

7. Polymerzusammensetzung nach Anspruch 1, wobei das erste Copolymer auf Basis von Vinylaromaten einen vinylaromatischen Block mit einem gewichtsmittleren Molekulargewicht von 3.800 bis 4.800, vorzugsweise 4.400 bis 4.700, gemessen durch Gelpermeationschromatografie, aufweist.

8. Polymerzusammensetzung nach Anspruch 1, wobei das Polymer ferner ein zweites Copolymer auf Basis von Vinylaromaten umfasst, das durch Polymerisation eines vinylaromatischen Monomers und eines konjugierten Dienmonomers gebildet wird, wobei der Gehalt an vinylaromatischem Monomer des zweiten Copolymers auf Basis von Vinylaromaten 10 bis 15 Gew.-% beträgt, der Vinylstrukturanteil des Gehaltes an konjugiertem Dienmonomer in dem zweiten Copolymer auf Basis von Vinylaromaten größer oder gleich 60 Gew.-% ist und ein Schmelzflussindex (MFI) des zweiten Copolymers auf Basis von Vinylaromaten kleiner oder gleich 5 g/10 min (230 °C, 2,16 kg) ist.

9. Polymerzusammensetzung nach Anspruch 8, wobei das Gewichtsverhältnis des ersten Copolymers auf Basis von Vinylaromaten zu dem zweiten Copolymer auf Basis von Vinylaromaten 1:0, 01 bis 1:5 beträgt.

10. Polymerzusammensetzung nach Anspruch 1, wobei das Polymer ferner ein zweites Copolymer auf Basis von Vinylaromaten umfasst, das durch Polymerisation eines vinylaromatischen Monomers und eines konjugierten Dienmonomers gebildet wird, wobei der Gehalt an vinylaromatischem Monomer des zweiten Copolymers auf Basis von Vinylaromaten 10 bis 25 Gew.-% beträgt, der Vinylstrukturanteil des Gehaltes an konjugiertem Dienmonomer in dem zweiten Copolymer auf Basis von Vinylaromaten kleiner oder gleich 45 Gew.-% ist und der Schmelzflussindex (MFI) des zweiten Copolymers auf Basis von Vinylaromaten kleiner oder gleich 10 g/10 min (230 °C, 2,16 kg) ist.

11. Polymerzusammensetzung nach Anspruch 10, wobei das Gewichtsverhältnis des ersten Copolymers auf Basis von Vinylaromaten zu dem zweiten Copolymer auf Basis von Vinylaromaten 1:0, 01 bis 1:2 beträgt.

12. Polymerzusammensetzung nach Anspruch 1, wobei das Polymer ein Polymer auf Olefinbasis umfasst, der Gehalt des Polymers auf Olefinbasis weniger als 10 Gew.-% des Gesamtgewichts der Polymerzusammensetzung beträgt und das Polymer auf Olefinbasis ein Homopolymer auf Olefinbasis, ein Copolymer auf Olefinbasis oder eine Kombination davon ist.

13. Haftklebstoff, hergestellt aus der Polymerzusammensetzung nach einem der Ansprüche 1 bis 12.

14. Folie, hergestellt aus der Polymerzusammensetzung nach einem der Ansprüche 1 bis 12.

15. Schutzfolie, umfassend mindestens eine Trägerschicht und mindestens eine Klebstoffschicht, wobei die Klebstoffschicht der Haftklebstoff nach Anspruch 13 ist.

16. Copolymer auf Basis von Vinylaromaten, dargestellt durch die Formel A1-B-A2, wobei Block A1 und Block A2 jeweils einen vinylaromatischen Block darstellen, Block B einen hydrierten konjugierten Dienblock mit einer Hydrierungsrate von mindestens 90 % darstellt, Block A1 und Block A2 identisch oder verschieden sind, das Copolymer auf Basis von Vinylaromaten durch Polymerisation eines vinylaromatischen Monomers und eines konjugierten Dienmonomers gebildet wird, der Gehalt an vinylaromatischem Monomer des Copolymers auf Basis von Vinylaromaten 16 bis 28 Gew.-% beträgt, der Vinylstrukturanteil des Gehaltes an konjugiertem Dienmonomer in dem Copolymer auf Basis von Vinylaromaten 32 bis 50 Gew.-% beträgt und der Schmelzflussindex (MFI) des Copolymers auf Basis von Vinylaromaten 20 g/10 min bis 60 g/10 min (230 °C, 2,16 kg) beträgt.

## Revendications

1. Composition polymère pour adhésifs ou films sensibles à la pression, comprenant :
un agent collant de 20 à 40 parties en poids ; et
un polymère de 60 à 80 parties en poids, le polymère plus l'agent collant égalant 100 parties en poids, le polymère comprenant au moins un premier copolymère à base de vinyle aromatique formé par polymérisation d'un monomère de vinyle aromatique et d'un monomère de diène conjugué, une teneur du monomère de vinyle aromatique du premier copolymère à base de vinyle aromatique étant de 16 % en poids ~ 28 % en poids, une teneur de structure de vinyle d'une teneur en monomère de diène conjugué dans le premier copolymère à base de vinyle aromatique étant de 32 % en poids ~ 50 % en poids ; et un indice de fluidité à chaud (MFI) du premier copolymère à base de vinyle aromatique étant de 20 g/10 min ~ 60 g/10 min (230 °C, 2,16 kg).

2. Composition polymère selon la revendication 1, dans laquelle la teneur du monomère de vinyle aromatique du premier copolymère à base de vinyle aromatique est de 18 % en poids ~ 26 % en poids, davantage de préférence de 20 % en poids ~ 24 % en poids.

3. Composition polymère selon la revendication 1, dans laquelle la teneur de structure de vinyle de la teneur en monomère de diène conjugué dans le premier copolymère à base de vinyle aromatique est inférieure ou égale à 45 % en poids, davantage de préférence de 32 % en poids ~ 45 % en poids, particulièrement de préférence de 32 % en poids ~ 42 % en poids, et plus particulièrement de préférence de 36 % en poids ~ 40 % en poids.

4. Composition polymère selon la revendication 1, dans laquelle l'indice de fluidité à chaud du premier copolymère à base de vinyle aromatique est de 30 g/10 min ~ 50 g/10 min (230 °C, 2,16 kg), davantage de préférence de 35 g/10 min ~ 45 g/10 min (230 °C, 2,16 kg).

5. Composition polymère selon la revendication 1, dans laquelle une température de transition d'ordre-désordre (ODT) du premier copolymère à base de vinyle aromatique est de 200 °C ~ 220 °C.

6. Composition polymère selon la revendication 1, dans laquelle un poids moléculaire moyen en poids du premier copolymère à base de vinyle aromatique est de 62 000 ~ 74 000, davantage de préférence de 64 000 ~ 72 000, mesuré par chromatographie de perméation sur gel.

7. Composition polymère selon la revendication 1, dans laquelle le premier copolymère à base de vinyle aromatique a une séquence de vinyle aromatique avec un poids moléculaire moyen en poids de 3 800 à 4 800, de préférence de 4 400 à 4 700, mesuré par chromatographie de perméation sur gel.

8. Composition polymère selon la revendication 1, dans laquelle le polymère comprend en outre un second copolymère à base de vinyle aromatique formé par polymérisation d'un monomère de vinyle aromatique et d'un monomère de diène conjugué, une teneur en monomère de vinyle aromatique du second polymère à base de vinyle aromatique étant de 10 % en poids ~ 15 % en poids, une teneur de structure de vinyle d'une teneur en monomère de diène conjugué dans le second copolymère à base de vinyle aromatique étant supérieure ou égale à 60 % en poids ; et un indice de fluidité à chaud (MFI) du second copolymère à base de vinyle aromatique étant inférieur ou égal à 5 g/10 min (230°C, 2,16 kg).

9. Composition de polymère selon la revendication 8, dans laquelle un rapport en poids du premier copolymère à base de vinyle aromatique au second copolymère à base de vinyle aromatique est de 1:0, 01 ~ 1:5.

10. Composition polymère selon la revendication 1, dans laquelle le polymère comprend en outre un second copolymère à base de vinyle aromatique formé par polymérisation d'un monomère de vinyle aromatique et d'un monomère de diène conjugué, une teneur en monomère de vinyle aromatique du second copolymère à base de vinyle aromatique étant de 10 % en poids ~ 25 % en poids, une teneur de structure de vinyle d'une teneur en monomère de diène conjugué dans le second copolymère à base de vinyle aromatique étant inférieure ou égale à 45 % en poids ; et un indice de fluidité à chaud (MFI) du second copolymère à base de vinyle aromatique étant inférieur ou égal à 10 g/10 min (230 °C, 2,16 kg).

11. Composition polymère selon la revendication 10, dans laquelle un rapport en poids du premier copolymère à base de vinyle aromatique au second copolymère à base de vinyle aromatique est de 1:0,01 ~ 1:2.

12. Composition polymère selon la revendication 1, dans laquelle le polymère comprend un polymère à base d'oléfine, une teneur du polymère à base d'oléfine est de moins de 10 % en poids d'un poids total de la composition polymère et le polymère à base d'oléfine est un homopolymère à base d'oléfine, un copolymère à base d'oléfine ou une de leurs combinaisons.

13. Adhésif sensible à la pression préparé à partir de la composition polymère selon l'une quelconque des revendications 1 à 12.

14. Film préparé à partir de la composition polymère selon l'une quelconque des revendications 1 à 12.

15. Film protecteur, comprenant au moins une couche de substrat et au moins une couche adhésive, dans lequel la couche adhésive est l'adhésif sensible à la pression selon la revendication 13.

16. Copolymère de vinyle aromatique représenté par une formule de A1-B-A2, dans lequel la séquence A1 et la séquence A2 représentent chacune une séquence de vinyle aromatique, la séquence B représente une séquence de diène conjugué hydrogéné ayant un taux d'hydrogénation d'au moins 90 %, la séquence A1 et la séquence A2 sont identiques ou différentes, le copolymère à base de vinyle aromatique est formé par polymérisation d'un monomère de vinyle aromatique et d'un monomère de diène conjugué, une teneur en monomère de vinyle aromatique du copolymère à base de vinyle aromatique est de 16 % en poids ~ 28 % en poids, une teneur de structure de vinyle d'une teneur en monomère de diène conjugué dans le copolymère à base de vinyle aromatique est de 32 % en poids ~ 50 % en poids ; et un indice de fluidité à chaud (MFI) du copolymère à base de vinyle aromatique est de 20 g/10 min ~ 60 g/10 min (230°C, 2,16 kg).
